**Europäisches Patentamt**

**European Patent Office**

**Office européen des brevets**

(11) Publication number: **0 019 415**
A1

(12) # EUROPEAN PATENT APPLICATION

(21) Application number: **80301494.3**

(22) Date of filing: **07.05.80**

(51) Int. Cl.³: **A 23 L 2/38**

(30) Priority: **10.05.79 US 37793**

(43) Date of publication of application:
**26.11.80 Bulletin 80/24**

(84) Designated Contracting States:
**CH DE FR GB LI NL**

(71) Applicant: **STAUFFER CHEMICAL COMPANY**

**Westport Connecticut 06880(US)**

(72) Inventor: **Staples, Lorna Carol**
**66 Bilton Street**
**Teaneck New Jersey 07666(US)**

(74) Representative: **Smith, Sydney et al,**
**Elkington and Fife High Holborn House 52/54 High**
**Holborn**
**London WC1V 6SH(GB)**

(54) Whey protein fortified acidic liquid beverages and preparation thereof.

(57) Whey protein fortified acidic liquid beverages are provided with palatable taste by acidifying the beverage with cold water soluble fumaric acid alone or in combination with a small amount of phosphoric acid. A single strenght whey protein fortified acidic beverage can be prepared using fumaric acid.

## WHEY PROTEIN FORTIFIED ACIDIC LIQUID BEVERAGES

## AND PREPARATION THEREOF

The present invention relates to whey protein fortified acidic liquid beverages and to the preparation thereof.

Acidic liquid beverages, either carbonated or still, especially of the citrus variety, are well known. In the preparation of liquid acidic beverages, inorganic acids such as phosphoric acid or organic acids such as citric acid are often used to acidify the beverages to the proper level. Phosphoric acid is generally used for cola type beverages which have a pH below 3. Citric acid is generally used to acidify still beverages which have a pH within the range of 4.0 to 3.

Acidified liquid beverages can be prepared in single strength or concentrate. Single strength beverages are those which are prepared from the raw ingredients in the concentration used in the final beverage. These beverages are directly bottled for sale. Generally, the contents of the bottles are pasteurized to prevent undue microbial growth.

Acidified liquid beverages can also be prepared as liquid concentrates. In one form, the concentrates containing all of the final ingredients are diluted to proper strength with water, carbonated water, fruit juices or like liquid. The diluted beverages so prepared are then bottled and if desired pasteurized, for sale to the consumer. In another form, the concentrate which contains all the flavoring but not all the acid needed to adjust the pH to the level desired is diluted and the pH adjusted at the bottling facility.

Because of their low, nutritive value, much investigation has been undertaken in an attempt to protein-fortify these acidic beverages. For instance, a clear, still beverage has been prepared using cheese whey protein concentrate prepared by ultrafiltration of cottage cheese whey (Holsinger et al., Food Technology, February 1973, p. 59). Also of relevance is U.S. Patent No. 3,922,375.

In the preparation of liquid beverages containing whey protein concentrate by Holsinger et al., the whey protein was ultrafiltered and then gel filtered to obtain a product having 81.4% protein, 10.8% lactose and a very low ash content of 1.5%. Citric acid and phosphoric acid were effectively used to acidify the solutions because of the low ash level of the whey protein fortifier. The products were storage stable when bottled for at least one year.

It is known that the salts of a whey protein concentrate exert a high acid buffering capacity (U.S. 3,896,241). This patent teaches a method for overcoming this problem by preparing a whey protein concentrate for use in beverages including the steps of filtering through diatomaceous earth,

-3-

then ultrafiltering and contacting the concentrate with a strongly cationic exchange resin. The product is low in mineral salt and has a low pH not requiring substantial use of acidulants. Both the product used in Holsinger et al. and U.S. Patent No. 3,896,241 required extensive costly processing in order to decrease the ash level sufficiently low for effective use.

In attempting to protein-fortify a liquid acidified beverage with a whey protein concentrate derived primarily by the ultrafiltration of whey, it was observed that the buffering capacity of the whey protein concentrate required a large amount of citric acid to adjust the pH to the proper range. A whey protein concentrate prepared by ultrafiltration generally has at least 3% ash. The higher the ash level, the more citric acid is required to adjust the pH to the proper level. The use of a larger amount of citric acid causes the taste of the beverage to become too sour and unpalatable.

Other acidulants such as fumaric acid are well known to be useful in acidifying various foods. Because of the non-hygroscopic character of fumaric acid vis-a-vis citric acid, it is an extremely valuable ingredient in extending the shelf-life of many kinds of powdered food products such as powdered beverages. However, the slow solubility rate of fumaric acid in water at low temperatures which is a disadvantage as an acidulant for cold water beverages, has been overcome by admixing the acid with 0.3% dioctyl sodium sulfosuccinate

-4-

and 0.5% calcium carbonate. This material, a cold water soluble fumaric acid, is sold for use in dried beverage powders, frozen food concentrates, frozen desserts, acidulated dry beverage bases and fumaric acid acidulated fruit juice drinks. An alternative method of increasing the solubility rate of fumaric acid in water is through the addition of a small percentage of modified starch. Cold water soluble fumaric acids for use in dry or powdered beverages are disclosed in U.S. Patent Nos. 3,011,894 and 3,181,953.

No prior art is known wherein cold water soluble fumaric acid has been used as an acidulant in liquid acidic beverages which contain a whey protein concentrate having a high ash content and which evidence severe problems in taste. Further, the greater the amount of protein used, the greater the amount of acid required to overcome the buffering effect of the protein and the ash. The limited solubility of fumaric acid does not make it adaptable for use in acidifying liquid beverages having higher levels of whey protein since the amount of acid needed to lower the pH far exceeds the solubility level of fumaric acid in the beverage. Because of the low solubility, fumaric acid is not recommended as an acidifying agent for liquid beverages.

It has now been found that the flavor problem incurred in providing for the necessary pH adjustment for a high ash, whey protein concentrate containing liquid beverage can be overcome.

In accordance with the present invention, it has been found that, in a liquid acidic beverage or liquid concentrate therefore fortified with a composition comprising 1) from about 75% to about 100% by weight of a whey protein concentrate having at least 40% protein and at least 3% and preferably from about 3% to about 15% ash and 2) from about 25% to 0% of another protein containing whey based product wherein the whey protein concentration of the liquid acidic beverage is from about 0.5% to about 5%, the pH can be effectively lowered by adjusting the pH within the range of from about pH 3 to pH 4 with a cold water soluble fumaric acid without providing a beverage which is too sour and unpalatable. A more economical product is also obtained because of a reduced amount of fumaric acid needed to effect the necessary pH adjustment vis-a-vis citric acid. A single strength beverage can be obtained using fumaric acid in place of cold water soluble fumaric acid when low concentrations of acid are required. The beverages of the present invention are stable both before and after pasteurization and storage.

Protein fortified beverages of the present invention when acidified from neutral pH to a pH of about 3-4 are less turbid than beverages fortified with whey protein concentrates dried at acidic pH which are subsequently acidified to the desired level.

As used herein, stable suspension is intended to cover beverages both before and after pasteurization which do not form precipitates and settle upon standing for one month. Commercial stable suspensions are defined as not forming precipitates or settling upon standing for three months.

The whey protein concentrate having at least 3% and preferably from about 3% to about 15% ash used in the present invention can be derived from any cheese whey. Cheese whey is the byproduct of the acid, or rennet coagulation of milk protein (i.e., casein) from milk in the manufacture of cheese. The whey obtained from the acid coagulation is called acid or cottage cheese whey and that obtained from rennet, sweet or cheddar cheese whey.

The preferred cheese whey for use in preparing the concentrates used in the present invention is 100% acid (cottage cheese) whey or blends with up to 20% sweet cheese whey. The more preferred is 100% acid (cottage cheese) whey. The whey protein concentrate prepared from acid whey has a bland flavor which does not interfere with the other flavors in the drink. The remaining description will relate to the preferred embodiment, a protein concentrate from acid cheese whey.

The whey protein concentrate used in the present invention is prepared by ultrafiltration (Horton, B.S. et al., Food Technology, Volume 26, page 30, 1972). The most effective results are obtained using an ultrafiltered whey concentrate from cottage cheese whey containing from about 40% to about 60% and preferably about 45-55% whey protein. These percentages are by weight based on the total dry solids in said concentrate. In a typical process, cottage cheese whey is neutralized to a pH of about 6.4 with 50% caustic. After storage, the pH is then adjusted to about pH 7.2 and any solids or precipitates are removed by centrifuged clarifiers. For effective long term storage stability, it is pre-ferred that the spin down after clarification is less than 0.1% by weight of the sample volume. The clarified liquor is then pasteurized and fed to an ultrafiltration membrane unit. The retentate is condensed and spray dried. Protein products generally comprising from about 40% to 60% whey protein (TN x 6.38), 10-30% lactose, 3-15% ash and 0.1-4% fat are prepared by this process. A typical product has about 10% total ash which includes about 1.9% sodium, 1.67% potassium, 1.15% calcium, 0.93% phosphorus and 0.21% magnesium. It is theorized that the phosphorus present as phosphate is the most significant factor of the ash in contributing to the buffering affect. The dried retentate with the aforegiven composition is considered a whey protein concentrate. While it is preferred to use the whey protein concentrate in the dry form, the liquid form can also be used on a percent by weight protein basis. Liquid levels in the final formulation are then adjusted accordingly. Liquid whey protein concentrate must be kept under refrigeration to prevent spoilage.

For nutritional purposes, it is preferred to use a low ash, low sodium whey protein concentrate in the liquid beverages of the invention, i.e., an ash level below the average of 10% and above the 3% lower limit. These can be prepared by processing acid whey at native pH to avoid the addition of sodium by neutralizing with caustic. Also, a low ash whey protein concentrate can be prepared by adjusting the protein content down to the desired level with a filler, i.e., dilute 60% whey protein concentrate to 50% whey protein with lactose. A sodium and ash level lower than that obtained by preparing a 50% whey protein concentrate directly by ultrafiltration can be obtained.

In addition to the whey protein concentrate, the whey protein fortifier composition can also include from about 25% to about 0% of another whey protein containing composition such as dried whey, delactosed whey and delactosed demineralized whey where demineralization is accomplished by any known method such as electrodialysis.

Cold water soluble fumaric acid is classified by the Food and Drug Administration as solubilized fumaric acid suitable for human consumption. These materials generally include fumaric acid mixed with a blend of 0.3% dioctyl sodium sulfosuccinate (DOSS) and 0.5% calcium carbonate (percent by weight based on the total dry weight of the fumaric acid). This is set forth in the Handbook of Food Additives, published by the Chemical Rubber Publishing Company at page 257. Other cold-water soluble fumaric acids such as those prepared with an edible starch (approximately less than 1%) are also useful in the present invention. By cold water soluble fumaric acid is meant any fumaric acid which has been modified to increase the rate of solubility in cold water (25°C.) greater than the rate of solubility for fumaric acid in water at 25°C.

The acidic soft drinks which can be fortified with protein in accordance with the present invention include any acidic soft drink, either natural or formulated, which has a final pH between the range of from about 3.0 to about 4.0. These include citrus and citrus flavored drinks including natural orange·juice, lemonade, lime, lemon-lime and the like. Drinks of other flavors such as mango can also be prepared. The soft drink can be carbonated or non-carbonated (still) as desired. Carbonation can be effected by any technique known to be useful in the art. The drinks which are most typically within the stated pH range are the citrus flavored type. A typical composition includes 11% sugar, 88% water, 0.23% citric acid and flavorings.

The acidic liquid beverage is normally comprised mainly of water as well as sugar (sucrose), protein fortifier composition, acidulant and flavoring agents. The liquid beverage can also contain natural liquid fruit juices, if desired. Any sweetening agents normally used in these beverages can be used in place of or combined with the sucrose.

The acidic liquid beverages of the invention are intended to be fortified with whey protein in an amount ranging from about 0.5% to about 5% by weight protein based on the total weight of the liquid beverage. It is preferable that the protein fortification range from about 1% to about 3% by weight. The actual amount of solids added depends on the concentration of whey protein in the whey protein concentrate.

The amount of acid required to be used depends on the amount of protein and ash contained in the beverage. The greater the amount of protein and ash, the greater the amount of acid needed to achieve the necessary pH. For instance, in a beverage containing 1.3% protein derived from a low ash, low sodium whey protein concentrate containing 50% protein, 0.3% cold water soluble fumaric acid was required to lower the pH to 3.35 and still obtain a very palatable beverage. In general, the fumaric acid acidulant can be used in amounts ranging from about 0.12% to about 0.50% by weight based on the total weight of the liquid beverage though this amount depends on the protein content utilized and the final desired pH within the range of 3 to 4.

Because of the low solubility of fumaric acid, unmodified fumaric acid can be used to acidify single strength beverages, particularly those requiring small amounts of acid for the necessary pH adjustment, i.e., low protein fortification. If the buffering effect of the whey protein concentrate is high enough, cold water soluble fumaric acid or mixtures of fumaric acid cold water soluble fumaric acid can be used. Cold water soluble fumaric acid can be and is preferably used for both single strength and concentrates. Concentrates are generally prepared for dilution at a rate of 6 to 1:4 to 1.

The liquid acidic beverage or concentrate can be prepared by dissolving the whey protein concentrate in water and adding thereto an amount of acid needed to decrease the pH to the proper level. The whey protein concentrate can also be admixed or coblended with the fumaric acid and, if desired,

-11-

the other dry ingredients, of the beverage, liquefied, and adjusted to the proper pH.

The beverage can also contain any of the optional flavoring ingredients, flavor enhancers, emulsifiers, coloring ingredients, clouding agents or other such ingredients normally used in preparing acid liquid beverages.

The preferred liquid beverages of the present invention are the citrus type. Fruit juices or flavor characteristic of the country of use can also be added such as mango.

It has also been found that fumaric acid and cold water soluble fumaric acid can be partially combined with phosphoric acid to provide the proper pH. For instance, cold water soluble fumaric acid can be used to partially reduce the pH below a pH of about 4.5 and preferably below a pH of about 4 followed by adding phosphoric acid to reduce the pH to the final desired level. The product is smooth, stable and very palatable. The liquid acidified beverage is less-tart than a similar beverage prepared using citric or malic acid in place of the phosphoric acid. The beverages prepared with citrus and malic acids are too tart and unpalatable. Phosphoric acids usable in this aspect of the invention include any food grade phosphoric acid such as 85% phosphoric acid. Phosphoric acid is generally used in small amounts, i.e., that amount needed to reduce the pH from about 4.5 to that pH within the range of 3 to 4 that is desired.

For single strength beverages and concentrates, cold water soluble fumaric acid is preferred though fumaric acid can be used in combination with the phosphoric acid for both types of beverages particularly if the amount of fumaric acid is sufficiently low to be soluble in the concentrate.

The beverages disclosed herein are those adapted to be conveyed to the consuming public for consumption without further dilution. In the case of the liquid concentrate, this is not intended to be sold to the consuming public but as is usual in the industry, to bottlers or dispensers of such liquid beverages. The liquid beverages are containerized and sold to the consuming public in containers appropriate to the liquid and the industry. Still beverages can be sold in waxed cartons, bottles or other like containers. Carbonated beverages are usually conveyed in containers of glass or plastic sufficiently adapted to maintain the gas pressure within the container. Concentrates are containerized in vessels adapted for end use, i.e., bottling or unit dispensing.

The beverages of the invention are particularly adapted to be conveyed to the public in a non-refrigerated state requiring pasteurization for health purposes. The proteins remain stable even after pasteurization. The beverages can also be conveyed in refrigerated storage if desired.

The present invention will be more fully illustrated in the examples which follow.

## EXAMPLE 1

A liquid acidic still beverage was prepared containing a whey protein concentrate prepared by ultrafiltering acid whey until a protein content of approximately 60% by weight of the whey protein concentrate is reached followed by diluting the whey protein concentrate with lactose to a protein level of about 50% to form a product lower in sodium and ash content than a whey protein concentrate prepared by ultrafiltering acid whey to about 50% protein. The following recipe for the liquid beverage was used:

INGREDIENTS

| | |
|---|---|
| Water | 200 milliliters |
| Sugar | 23 grams |
| Whey Protein Concentrate | 6 grams |

Part of the sugar was dissolved in the 200 milliliters of water. The remaining sugar was dry mixed with the whey protein concentrate in a mortar with a pestle. The dry mix was slowly added to the sugar/ water solution with stirring until dissolved. Using a pH meter and magnetic stirrer, cold water soluble fumaric acid was gradually added with stirring until a pH of 3.35 was reached. 0.6 grams of fumaric acid was required. Controls using citric acid (1.47 grams) and malic acid (1.32 grams) were also prepared using the same procedure.

The beverage prepared with fumaric acid was the least sour and most sweet of the three. The citric acid and malic acid controls were very sour and unpalatable.

The beverages were pasteurized by heating at 75°C. for 20 minutes and cooled. All three beverages were stable.

## EXAMPLE 2

A liquid whey protein fortified acid, i.e., still beverage was prepared by blending 5.8 grams of the whey protein concentrate as defined in Example 1 and 0.6 grams of a cold water soluble fumaric acid (modified with starch) in a mortar with a pestle. This blend is then added slowly to a solution of 23 grams sugar dissolved in 200 milliliters of water with mixing until dissolved. The product was pasteurized as in Example 1. The pH was 3.4 with a somewhat tart taste. Natural mango flavor was added to provide a pleasant beverage.

## EXAMPLE 3

Example 2 was repeated using 6 grams of whey protein concentrate and 0.6 grams of regular fumaric acid. The liquid beverage had a palatable somewhat tart taste.

## EXAMPLE 4

A whey protein containing beverage was prepared as in Example 1 with the exception that the pH was lowered from a native pH of 6.5 to a pH of 3.7 using 0.4 grams of cold water soluble fumaric acid. The pH was then adjusted from pH 3.7 to pH 3.35 with citric acid (0.66 grams). The beverage was extremely sour and unpalatable.

## EXAMPLE 5

The process of Example 4 was repeated using 85% phosphoric acid in place of the citric acid. The beverage was extremely smooth, less tart than the product of Example 4 and very palatable.

-16-

Claims:

1. An acidic whey protein fortified liquid beverage or liquid concentrate therefor adapted for storage in a container comprising:

a. a whey protein fortifier composition comprising:

1. a whey protein concentrate derived by the ultrafiltration of whey having a protein content of from about 40% to about 60% and ash content of at least 3%; and

2. from about 25% to 0% of another whey protein containing product derived from whey; and

b. a cold water soluble fumaric acid;

said whey protein fortifier composition being used in an amount sufficient to provide in said liquid beverage from about 0.5% to 5% whey protein and said fumaric acid being used in an amount sufficient to provide a pH within the range of from about 3.0 to about 4.0.

2. A concentrate or beverage as claimed in claim 1 characterised in that the whey protein concentrate is derived from acid whey.

3. A concentrate or beverage as claimed in claim 1 or claim 2 characterised in that the fortifier composition comprises 100% whey protein concentrate.

4. A concentrate or beverage as claimed in any of claims 1 to 3 characterised in that it is a citrus beverage.

5.    A beverage as claimed in any of claims 1 to 4
characterised in that it contains from about 1% to
about 3% protein.

6.    A concentrate or beverage as claimed in any of
claims 1 to 5 characterised in that the pH is adjusted
within the range of 3.1 and 3.5 with said cold water
soluble fumaric acid.

7.    A concentrate or beverage as claimed in any of claims
1 to 6 characterised in that the whey protein concentrate
has an ash content of from about 3% to about 15% by
weight.

8.    A method for the preparation of an acidic liquid
beverage or concentrate therefor adapted for storage
in a container comprising:

    a.    forming a liquid mixture for a beverage
    containing a whey protein fortifier composition
    comprising:

        1.    from about 75% to 100% by weight of a
        whey protein concentrate derived by ultrafiltration of whey, said concentrate having
        from about 40% to about 60% protein and an
        ash content of at least 3%, and
        2.    from about 25% to 0% of another whey
        protein containing product derived from
        whey; and
    b.    acidifying said beverage to a pH within the
    range of from about 3.0 to about 4.0 with cold
    water soluble fumaric acid;
said whey protein fortifier composition being used in
an amount sufficient to provide in said liquid beverage
from about 0.5% to about 5% by weight whey protein.

9.    The method as claimed in claim 8 characterised in that the mixture for said liquid beverage is partially acidified with cold water soluble fumaric acid to a pH below at least 4.5 followed by further decreasing the pH to the desired pH within said range of from about 3 to about 4 with phosphoric acid.

10.    A method as claimed in claim 9 characterised in that the cold water soluble fumaric acid is used to reduce the pH to below a pH of about 4.

11.    A single strength containerized acidic whey protein fortified liquid beverage comprising:
       a.    a whey protein concentrate derived by the ultrafiltration of whey having a protein content of from about 40% to about 60% and an ash content of at least 3%; and
       b.    fumaric acid;
said whey protein concentrate being used in an amount sufficient to provide in said liquid beverage from about 0.5% to 5% whey protein and said fumaric acid being used in an amount sufficient to provide a pH within the range of from about 3.0 to about 4.0.

12.    A method for preparing a single strength containerized acidic liquid beverage comprising:
       a.    forming a single strength liquid beverage containing a whey protein fortifier composition comprising:
              1.    from about 75% to 100% by weight of a whey protein concentrate derived by ultrafiltration of whey, said concentrate having from about 40% to about 60% protein and at least 3% ash; and
              2.    from about 25% to 0% of another whey protein containing product derived from whey;
       b.    acidifying said beverage to a pH within the range of from about 3.0 to about 4.0 with fumaric
acid; and

    c.   containerizing said beverage;
said whey protein fortifier composition being used
in an amount sufficient to provide in said liquid
beverage from about 0.5% to about 5% by weight whey
protein.

13.    The method as claimed in claim 12 characterised
in that said liquid beverage is partially acidified
with said fumaric acid to a pH below at least 4.5
followed by further decreasing the pH to the desired
pH within said range of from about 3 to about 4 with phosphoric acid.

14.    A method for preparing a containerized acidic
liquid beverage comprising:

    a.   forming a liquid beverage concentrate containing
a whey protein fortifier composition comprising:

        1.   from about 75% to about 100% by weight of
a whey protein concentrate derived by
ultrafiltration of whey, said concentrate
having from about 40% to about 60% protein
and at least about 3% ash; and
        2.   from about 25% to about 0% of another
whey protein containing product derived from
whey;

    b.   partially acidifying said concentrate with
fumaric acid followed by further decreasing the
pH with phosphoric acid;

    c.   diluting the concentrate to the desired
strength for consumption either before, during
or after pH adjustment; and

    d.   packing the liquid beverage in containers,
said whey protein fortifier composition being used in
an amount sufficient to provide in said liquid containerized beverages from about 0.5% to about 5% by weight
whey protein; said fumaric acid being used in an
amount sufficient to reduce the pH below at least
4.5 and said phosphroic acid reducing the pH within
the range of about 3 to about 4 based on the final
diluted beverage.

15.  A liquid beverage as claimed in claim 11 characterised in that the whey protein concentrate has from
about 3% to about 15% ash conten.

16.  A liquid beverage as claimed in claim 1 or
claim 11 which is storage stable for at least three
months.

| Category | Citation of document with indication, where appropriate, of relevant passages | Relevant to claim | CLASSIFICATION OF THE APPLICATION (Int. Cl. 3) |
|---|---|---|---|
| X | GB - B - 1 372 219 (KRAFTCO CORP.) <br> * Claims 1,2; page 2, lines 10-22, 38-61; example III * | 1-6,8, 11,12 | A 23 L 2/38 |
| | -- | | |
| | FR - A - 2 120 794 (CALPIS SHOKU-HIN KOGYO K.K.) <br> * Claims 1-7,10,11; page 4, lines 7-15 * | 1,2,4 | |
| | -- | | |
| A | US - A - 3 737 326 (J.A. BASSO et al.) <br> * Example 2 * | 1 | TECHNICAL FIELDS SEARCHED (Int.Cl. 3) |
| | -- | | A 23 L 2/38 |
| A | FR - A - 2 369 798 (STAUFFER CHE-MICAL CIE.) <br> * Claims 1, 13 * | 1,4 | |
| | ---- | | |

**DOCUMENTS CONSIDERED TO BE RELEVANT**

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 26-08-1980 | COUCKE |

EPO Form 1503.1  06.78